# EUROPEAN PATENT APPLICATION

(11) **EP 4 417 840 A1**
(43) Date of publication of application: **21.08.2024**
(21) Application number: 24157452.4
(22) Date of filing: 13.02.2024
(51) Int. Cl.: F16H 61/4157, F16H 61/421, F16H 61/431

(54) **HYDROSTATIC BRAKING METHOD**

(30) Priority: 14.02.2023 IT 202300002499
(71) Applicant: CNH Industrial Italia S.p.A., 10156 Torino (IT)
(72) Inventor: GARRAMONE, Adriano, 10156 Turin (IT); LIBERTI, Stefano, 10156 Turin (IT); GRAVILI, Andrea, 10156 Turin (IT); VENEZIA, Antonio, 10156 Turin (IT)
(74) Representative: CNH Industrial IP Department

(57) **Abstract**

Method of controlling a braking action of a working or agricultural machine equipped with a hydraulic transmission and a hydraulic service brake, the hydraulic transmission (HY) comprising an electrically controllable and variable displacement hydraulic pump (HP) and a motor electrically controllable and variable displacement hydraulic system (HM), the hydraulic pump and the hydraulic motor being interconnected by means of a high pressure hydraulic line (F) and a low pressure hydraulic line (R), the method comprising an initial acquisition step ( Steps 1 and 2) of at least one vehicle parameter and then, in succession, a first phase of progressive reduction of a displacement (PD) of the hydraulic pump (HP), a second phase (Step 5) of progressive increase of a displacement ( MD) of the hydraulic motor (HM) and, optionally, a third phase for activation of the service brake.

## Description

### Field of the invention

The present invention relates to the field of work vehicles equipped with hydrostatic transmission.

### State of the art

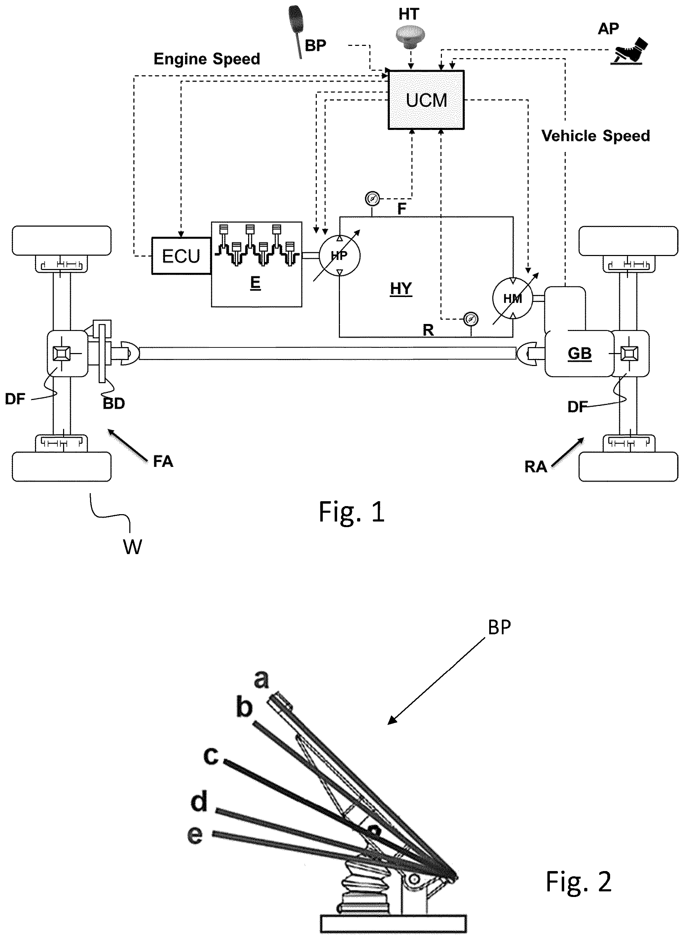

Motorized agricultural or work vehicles are well known for moving materials and performing specific heavy duty tasks. With reference to figure 1, a prime mover E, generally internal combustion, drives in rotation a hydraulic pump HP with variable displacement, which feeds a hydraulic motor HM operatively connected to the hydraulic pump defining a so-called hydrostat HY, in which a forward hydraulic line F and a return hydraulic line R interconnect the hydraulic pump with the hydraulic motor.

The displacement of the hydraulic pump is controlled electrically. Generally, there is a map of adjustments of the geometry of the hydraulic pump, which makes it possible to control its displacement as a function of the rotation speed of the prime mover. Typically, the relationship between pump displacement and prime mover speed is linear from prime mover idle conditions. In other words, when the prime mover is idling (low idle) the angle of the plate (swash plate) which defines the displacement of the hydraulic pump realizes zero displacement.

Two solenoid valves are associated with the hydraulic pump, one for forward control and one for reverse control. Therefore, the displacement of the hydraulic pump depends on the excitation current of one of the two solenoid valves and on the hydrostatic load perceived by the hydraulic pump itself.

The hydraulic motor, that forms the hydrostat together with the hydraulic pump can also be controlled electrically, by means of an excitation current.

Generally, the displacement of the hydraulic motor is inversely proportional to the speed of the vehicle. It tends to decrease allowing the vehicle to increase its speed. However, as the resistant torque perceived by the hydraulic motor increases, the displacement automatically increases to express the driving torque necessary to balance the resistant torque.

The hydraulic pump of the hydrostat supplements the braking of the vehicle according to the position of the brake pedal. The service brake comprises mechanical friction elements in mutual contact which, as known, cause the vehicle to slow down when they are pressed against each other, such as for example the brake pads against a relative disc.

However, the service brake is activated only when the brake pedal is depressed beyond a predetermined position threshold.

Starting from the brake pedal release position, several consecutive intervals of positions are identified. The first interval is associated with the "brake filling" condition. Under these conditions, the hydraulic circuit of the service brake is preloaded, so as to bring the mechanical friction elements into mutual contact, but without developing any appreciable friction force.

The first interval is divided into two sub-intervals. In the first of the two sub-intervals the brake filling function is performed, and at the same time a procedure called "inching" is performed, i.e. in which the hydraulic pump is controlled so as to reduce its displacement proportionally to the depression of the brake pedal.

When the vehicle is in motion and the accelerator pedal is released, the prime mover is driven into rotation by the hydraulic pump. In other words, the pump and the hydraulic motor exchange their respective roles: the hydraulic pump works as a hydraulic motor driving the prime mover in rotation, while the hydraulic motor works as a pump, supplying the hydraulic pump. For convenience, however, the names of the components are not changed in the course of the present description to avoid confusion.

Therefore, the designation "hydraulic pump HP " remains the same regardless of the operating conditions as a pump or hydraulic motor. This also applies to the hydraulic motor.

In the second sub-interval, the "inching" procedure is finished and therefore only the brake filling procedure continues.

A second range of positions, adjacent to the first range, instead provides for the activation of the service brake proportionally to the depression of the brake pedal. Ideally, the action of the service brake should be consequential to the braking action operated by the hydrostat thanks to the decrease in the displacement of the hydraulic pump. However, a sort of braking "hole" is detected in the second sub-interval of the first interval, due to the slowness with which the service brake is able to react. It has been observed that the braking action follows the action on the brake pedal with a minimum delay of more than 1.5 seconds. When the pedal is only partially depressed, the action delay, on the other hand, can exceed 2.5 seconds.

In particular, between the end of the inching procedure and the start of mechanical braking, i.e. operated by means of the service brake, there is a time interval, which, albeit small, produces discomfort: the operator perceives a situation of impotence and danger as the vehicle does not respond properly to the controls.

Therefore, the second sub-interval of the first interval is sandwiched between the first sub-interval and the second interval and is referred to as "low braking" precisely because it is characterized by a poor response of the vehicle to the action on the brake pedal.

Unless specifically excluded in the detailed description that follows, what is described in this chapter is to be considered as an integral part of the detailed description.

### Summary of the invention

The object of the present invention is to improve the response of the vehicle to the action of the operator on the brake pedal.

The basic idea of the present invention is to implement a procedure within the low braking sub-range, which allows to further contribute to vehicle braking by minimizing the situation described above. In particular, the idea is to control the hydraulic motor by increasing its displacement proportionally to the position of the brake pedal.

This fact leads to a significant increase in the torque which is transferred to the prime mover, which contributes to braking the vehicle at least thanks to the relative internal frictions.

In other words, therefore, by moving the brake pedal from the release position towards the fully activated position, a first interval is identified in which the displacement of the hydraulic pump is proportionally reduced up to a predetermined value and subsequently the displacement of the hydraulic motor is proportionally increased up to a predetermined value. Subsequently, the braking force is increased thanks to the intervention of the service brake.

The braking actions are coordinated in order to avoid braking "holes" which lead to the filling of discomfort described above.

It is worth highlighting that the three phases are not to be considered separated, in the sense that partial overlaps can be expected.

The procedure for increasing the displacement of the hydraulic motor can preferably overlap with the step for decreasing the displacement of the hydraulic pump. Similarly, the intervention of the service brake can preferably overlap with the procedure for increasing the displacement of the hydraulic motor. In other words, the consecutive intervention intervals partially overlap. Preferably, the final value of the hydraulic motor displacement is acquired or calculated as a function of the brake pedal position and as a function of the vehicle speed. Preferably, the rate of increase of the hydraulic motor displacement is acquired or calculated as a function of the brake pedal position and as a function of the vehicle speed. Preferably, two look up tables are implemented through which the target value of the displacement and the rate of variation of the displacement between the value of the current displacement and the value of the target displacement are obtained at the same time.

The current value of the displacement capacity is acquired in the instant in which an action on the brake pedal is detected.

The rate of variation of the displacement is suitably selected so as to avoid the prime mover overspeed.

For this purpose, according to a preferred variant of the invention, together with the variation of the displacement of the hydraulic motor, and preferably also of the hydraulic pump, a feedback control is activated which, on the basis of the rotation speed of the prime mover, inhibits any further variation of the displacement of the hydraulic motor as long as the rotation speed of the prime mover exceeds a predetermined speed threshold.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and non-limiting purposes, in which:
Fig. 1 shows a diagram of hydraulic transmission of a working or agricultural machine according to the prior art and object of the modification of the present invention;
Fig.2 shows a brake pedal of the vehicle shown in figure 1 with an indication of the position intervals;
Fig.3 shows a transposition of the intervals of fig. 2 in a diagram;
Fig.4 shows another example of transposition of the intervals of positions;

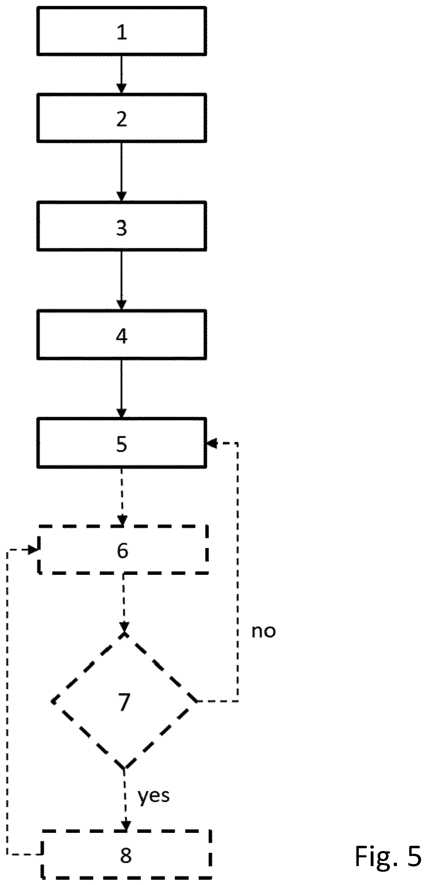

Fig.5 shows an example of a flow chart object of the present invention.

The same reference numbers and letters in the figures identify the same elements or components or functions.

It should also be noted that the terms "first", "second", "third", "superior", "inferior" and the like may be used herein to distinguish various items. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

### Detailed description

The present invention proposes a control method of a hydraulic transmission of a working or agricultural vehicle, for example according to the scheme of figure 1 of the prior art. The transmission HY comprises an electrically controllable, variable displacement hydraulic pump HP and an electrically controllable, variable displacement hydraulic motor HM.

The shaft of the hydraulic motor is operatively connected to a driving axle RA and/or FA, preferably, but not necessarily, through a discrete ratio gearbox GB. The driving axle can be equipped with a differential DF, which distributes the driving torque to the axle shafts, which drive the wheels W in rotation.

The hydraulic pump and the hydraulic motor are hydraulically interconnected by a high-pressure line F and a low-pressure line R, also named delivery line and return line.

A processing unit ECU is configured to control the operation of the prime mover E, generally internal combustion and more preferably diesel cycle.

Another processing unit UCM is arranged to control the operation of human/machine interfaces, such as the throttle lever AP, the brake lever BP and the selector position HT to select the park, forward and reverse configurations.

The UCM processing unit receives as input some parameters including the rotation speed "Engine Speed" of the prime mover E and the speed of the vehicle "Vehicle Speed" as well as the signals generated by the man/machine interfaces and manages, among others, the hydrostat HY and work organs such as, for example, a mechanical arm and the like.

Generally, the work organs are actuated by means of hydraulic actuators, fed by a dedicated hydraulic circuit, fed by a hydraulic pump (not shown) driven in rotation by the prime mover E.

Figure 2 shows an example of a brake pedal BP. It is worth highlighting that the same functionality described in detail below can be implemented using a hand lever.

Figure 2 shows the brake pedal positions in small letters. The release position "a" and the fully depressed position "e" of the pedal are identified.

Between these end positions, intermediate positions and the same number of activation intervals of the pedal are identified.

A first range of positions a - b is defined as a "dead band", as it does not produce any effect, either on the hydrostat or on the service brake. For this reason, the interval will not be mentioned again in the following. It exists to take into account that the operator can keep his foot on the brake pedal without intending to apply any braking and the fact that the vehicle often travels over rough terrain. In the absence of the dead band, the vehicle would be braked even unintentionally by the operator.

A first interval b - d is called "brake filling". During this interval, the service brake, of the hydraulic type, is pre-activated, bringing, as described above, the friction elements into mutual contact without however developing any appreciable braking force.

The first interval b - d can be divided into
- a first sub-interval b - c and
- a second sub-interval c - d, contiguous to each other. During the first sub-interval the inching procedure is also
performed, i.e. in which the hydraulic pump is adjusted so as to progressively reduce its displacement PD, proportionally to the position of the brake pedal.

According to the present invention, in the second sub-range, the displacement of the hydraulic motor is progressively increased.

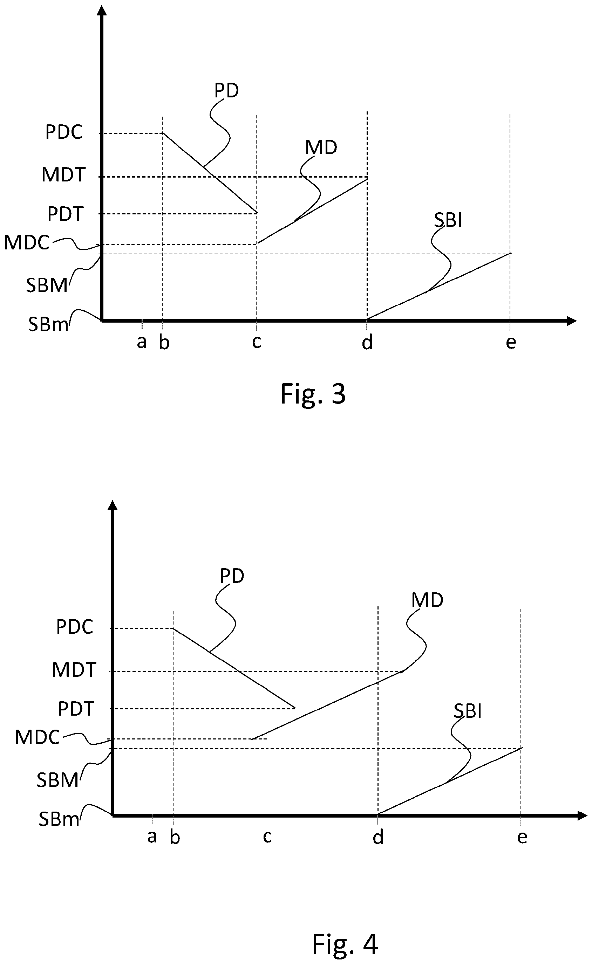

In the second interval d - e the activation of the service brake is envisaged with a relative appreciable contribution to braking the vehicle with an intensity proportional SBI to the position of the brake pedal within the interval d - e. With reference to figures 3 and 4, the intervals according to two variants of the present invention are analysed.

It is worth highlighting that the width of the intervals is exemplary. In particular, the first interval b - d can be smaller than the second interval d - e. Figures 3 and 4 are intended only to make the invention easy to be understood.

In the first sub-range b - c, the hydraulic pump HP displacement PD decreases from its current PDC value to its PDT target value as the brake pedal is moved from position b to position c. Evidently, the target value PDT of displacement is lower than the current value PDC.

In the second sub-range c - d, the displacement MD of the hydraulic motor HM increases from its current value MDC to its target value MDT as the brake pedal is moved from position c to position d. Evidently, the target value MDT of displacement is greater than the current MDC value.

In the second interval d - e, the intensity of the service brake's braking contribution SBI increases from the minimum value SBm equal to zero to the maximum value SBM as the brake pedal is moved from position d to position e.

It can be seen that the trend is approximately linear, however, in relation to the characteristics of the components defining the hydrostat and the service brake, these trends may not be linear.

Figure 4 differs from Figure 3 in that there is an overlapping area between the phase of decreasing the displacement of the hydraulic pump and the phase of increasing the displacement of the hydraulic motor and between the phase of increasing the displacement of the hydraulic motor and the phase of full activation of the service brake. This fact further improves the continuity of the braking actions.

### Example 1

It is assumed that the operator acts on the brake pedal, identifying a position belonging to the interval d - e. According to a preferred variant of the invention, the processing unit calculates or acquires the target value MDT of the hydraulic motor displacement and the speed with which this displacement value is reached.

At the same time, the processing unit monitors the rotational speed of the prime mover and prevents a further increase in the displacement of the hydraulic motor as a response to the prime mover exceeding a rotational speed of predetermined threshold.

### Example 2

It is assumed that the operator acts on the brake pedal, identifying a position belonging to the interval c - d. Evidently, in this interval, although the service brake is not expected to intervene, the brake filling procedure is nevertheless implemented to ensure rapid service brake intervention should the operator increase the pressure on the brake pedal.

The processing unit calculates or acquires a target value of the hydraulic motor displacement and a rate of change of its displacement from the current value to the target value. Thus, first the displacement of the hydraulic pump is progressively reduced up to the target value PDT and then the displacement of the hydraulic motor is increased up to the target value MDT.

In general, the target value of the hydraulic motor displacement is calculated as a function of
- the position of the brake pedal,
- the speed of the vehicle and preferably also in operation
- the speed of rotation of the prime mover e
- the value of the current displacement of the hydraulic motor.

The method object of the present invention can be summarized with the following steps:
- Step 1: detection of an action on the brake pedal, and acquisition of a final brake pedal operation position;
- Step 2 acquisition of an initial speed of the vehicle; in other words, a vehicle speed value is acquired at the instant in which the braking command is detected,
- Step 3 calculation of a first target value of hydraulic motor displacement as a function of said initial speed,
- Step 4 calculating a rate of change of a hydraulic motor displacement control signal to bring the hydraulic motor displacement to the first displacement target value;
- Step 5 generation of a hydraulic motor displacement control signal to achieve said first displacement target value according to said rate of change, as long as the brake pedal is kept depressed.

Preferably, during the variation of the displacement, a rotation speed value of the prime internal combustion engine is monitored (Step 6), and when said speed value exceeds (Step 7 = yes) a predetermined speed threshold, said variation of the displacement of the hydraulic motor is interrupted (Step 8) as long as the rotation speed of the internal combustion engine exceeds a second speed threshold lower than the first speed threshold.

It is important to highlight that in the course of the present invention, the processing units ECU and UCM have been presented as separate units, however the respective functions can be implemented in a single processing unit. According to a preferred implementation of the present invention, before starting the progressive increase of the displacement of the hydraulic motor, the following conditions are checked:
- the accelerator pedal is fully released,
- the vehicle speed is higher than a predetermined threshold, for example 10 km/h.

It is clear that the first condition is essential for the hydrostat to contribute to braking both in relation to the first and second intervention phases.

The second condition, on the other hand, impacts only on the second phase. In other words, if the second condition is not verified, the displacement of the hydraulic motor continues to be controlled according to a "normal" strategy, in which the displacement is exclusively a function of the vehicle speed. Conversely, when the first and second conditions are satisfied, the displacement of the hydraulic motor is controlled so as to offer a further contribution to braking the vehicle.

When the braking action ends, i.e. when the brake pedal is released, both the hydraulic pump and the hydraulic motor are controlled according to the "normal" control strategy where
- the displacement of the hydraulic pump is an exclusive function of the rotation speed of the prime mover e
- the displacement of the hydraulic motor is an exclusive function of the vehicle speed.

The present invention can advantageously be implemented through a computer program comprising coding means for carrying out one or more steps of the method, when this program is executed on a computer. Therefore, it is understood that the scope of protection extends to said computer program and also to computer-readable means comprising a recorded message, said computer-readable means comprising program coding means for carrying out one or more steps of the method, when said program is run on a computer. Variants of the non-limiting example described are possible, without however departing from the scope of protection of the present invention, including all equivalent embodiments for a person skilled in the art, to the contents of the claims.

From the description given above, the person skilled in the art is capable of realizing the object of the invention without introducing further constructive details.

## Claims

1. Method of controlling a braking action of a working or agricultural machine equipped with a hydraulic transmission and a hydraulic service brake, the hydraulic transmission (HY) comprising an electrically controllable and variable displacement hydraulic pump (HP) and an electrically controllable and variable displacement hydraulic motor (HM), the hydraulic pump and the hydraulic motor being interconnected by a high pressure hydraulic line (F) and a low pressure hydraulic line (R), the method comprising
- an initial acquisition phase (Steps 1 and 2) of at least one vehicle parameter and then, in succession:
- a first phase of progressive reduction of a displacement (PD) of the hydraulic pump (HP),
- a second phase (Step 5) of progressive increase of a displacement (MD) of the hydraulic motor (HM) and optionally
- a third phase for activation of the service brake.

2. The method according to claim 1, wherein said at least one parameter comprises a current brake pedal position and wherein the method further comprises a step of calculating or acquiring (Step 3) a first motor displacement target value (MDT) hydraulic, function at least of the current position of the brake pedal.

3. A method according to claim 2, wherein said progressive increment (Step 5) of said second step is operated according to a predetermined increasing rate of the hydraulic motor displacement.

4. The method according to claim 3, wherein said predetermined increasing rate of the hydraulic motor displacement is calculated or acquired (Step 4) based on said at least one parameter.

5. The method according to any one of the preceding claims 3 or 4, wherein said parameter further comprises at least one of
- a current value of the vehicle speed,
- a value of the rotational speed of the prime mover,
- a current value of the hydraulic motor displacement, and wherein the hydraulic pump is operatively connected to a prime mover (E) and wherein said displacement target value (MDT) and/or said hydraulic motor displacement rate of change are a function of at least one of:
- the current value of the vehicle speed,
- the value of the rotational speed of the prime mover,
- the current value of the hydraulic motor displacement.

6. Method according to any one of the preceding claims comprising the following steps in succession:
- (Step 1) detection of a brake command on a brake pedal (BP) and acquisition of a brake pedal end position,
- (Step 2) acquisition of an initial speed of the vehicle,
- (Step 3) calculation of a first target value of hydraulic motor displacement as a function of said initial speed,
- (Step 4) calculating a rate of change of a hydraulic motor displacement control signal to bring the hydraulic motor displacement to the first displacement target value;
- (Step 5) generating a hydraulic motor displacement control signal to achieve said first displacement target value according to said rate of change, as long as the brake pedal is kept depressed.

7. The method according to claim 6, wherein during the generation of said control signal such that the engine displacement varies according to said rate of change, the method comprises
- (Step 6) monitoring of the rotation speed value of the prime mover and when said speed value exceeds a first predetermined speed threshold (Step 7 = yes),
- (Step 8) reduction of the hydraulic motor displacement so as to induce the rotation speed of the prime mover below a second speed threshold lower than the first speed threshold and/or temporary interruption of the variation of the hydraulic motor displacement as long as the rotation speed of the internal combustion engine exceeds a second speed threshold lower than said first threshold.

8. Hydraulic transmission of a working or agricultural machine, the transmission (HY) comprising an electrically controllable and variable displacement hydraulic pump (HP) and an electrically controllable and variable displacement hydraulic motor (HM) and processing means (UCM) configured for
- detect a signal representative of an action on a brake pedal and at least one further vehicle parameter, and then to carry out in succession:
- a first phase of progressive reduction of the displacement (PD) of the hydraulic pump (HP),
- a second phase (Step 5) of progressive increase of the displacement (MD) of the hydraulic motor (HM) and optionally
- a third phase for activation of the service brake.

9. The transmission according to claim 8, wherein the processing means is configured for
- acquire a current speed of the vehicle,
- calculate a first target value of hydraulic motor displacement as a function of said current speed,
- calculating a rate of change of a hydraulic motor displacement control signal to bring the hydraulic motor displacement to the first displacement target value;
- generating a hydraulic motor displacement control signal to achieve said first displacement target value according to said rate of change.

10. The transmission according to claim 8 or 9, wherein the processing means is configured to, during generation of said control signal such that the engine displacement varies according to said rate of change,
- monitor a rotation speed value of the internal combustion engine and when said speed value exceeds a first predetermined speed threshold (Step 7 = yes),
- reduce the displacement of the hydraulic motor so as to induce the rotation speed of the internal combustion engine below a second speed threshold lower than the first speed threshold and/or to temporarily interrupt the variation of the displacement of the hydraulic motor until the speed of rotation of the internal combustion engine is reduced below said second speed threshold lower than the first speed threshold.

11. A computer program comprising instructions for causing the transmission according to any of claims 8 - 10 to perform all steps of the method according to any of claims 1 - 7.

12. A computer readable medium having stored the computer program according to claim 11.
